# EUROPÄISCHE PATENTSCHRIFT

(11) **EP 1 373 360 B1**
(45) Veröffentlichungstag und Bekanntmachung des Hinweises auf die Patenterteilung: **15.10.2008**
(21) Anmeldenummer: 01905567.2
(22) Anmeldetag: 26.02.2001
(51) Int. Cl.: C08G 63/80, C08G 63/88, C08F 6/26

(54) **VERFAHREN UND VORRICHTUNG ZUR KONTINUIERLICHEN POLYKONDENSATION VON POLYESTERMATERIAL IN FESTER PHASE**
METHOD AND DEVICE FOR THE CONTINUOUS POLYCONDENSATION OF POLYESTER MATERIAL IN THE SOLID PHASE
PROCEDE ET DISPOSITIF DE POLYCONDENSATION EN CONTINU DE MATIERE POLYESTER EN PHASE SOLIDE

(43) Veröffentlichungstag der Anmeldung: 02.01.2004
(73) Patentinhaber: Bühler AG, 9240 Uzwil (CH)
(72) Erfinder: BORER, Camille, CH-8247 Flurlingen (CH); MÜLLER, Martin, CH-9240 Uzwil (CH); CULBERT, Brent-Allen, CH-9500 Wil (CH)
(74) Vertreter: Frommhold, Joachim
(86) Internationale Anmeldenummer: PCT/CH2001/000124
(87) Internationale Veröffentlichungsnummer: WO 2002/068498

(56) Entgegenhaltungen:
- WO-A-00/01754
- US-A- 4 271 287
- US-A- 4 584 366
- US-A- 5 090 134
- US-A- 5 510 454
- DATABASE WPI Week 8412 Derwent Publications Ltd., London, GB; AN 1984-071636 XP002166306 & JP 59 025815 A (TEIJIN LTD)

## Beschreibung

Die Erfindung betrifft ein Verfahren zur kontinuierlichen Polykondensation von Polyestermaterial in fester Phase, insbesondere von PET in Form von Granulat oder dergleichen gemäss dem Oberbegriff des Patentanspruchs 1 sowie eine Vorrichtung zur Durchführung des Verfahrens gemäss dem Oberbegriff des Patentanspruchs 9.

Je nach dem Verwendungszweck von Polyestermaterialien sind besondere Eigenschaften erforderlich. Können gewisse Eigenschaften bereits mit der Rezeptur von Komponenten, Co-Komponenten oder Additiven gezielt modifiziert werden, sind andere Eigenschaften wie z.B. ein hohes Molekulargewicht und hohe Reinheit erst durch eine Nachbehandlung in fester Phase (SSP) erreichbar. Da Polyesterproduktion und Nachbehandlung meist zeitlich und örtlich getrennt erfolgen, wird als Zwischenprodukt ein Granulat hergestellt. Dieses fällt auf Grund geringer Kristallisationsgeschwindigkeit und schneller Abkühlung der Polyesterschmelze in amorpher Form an. Beim Granulieren und Lagern nimmt das Granulat Feuchtigkeit auf, was beim späteren Wiederaufschmelzen zur Hydrolyse führen kann. Zudem haben amorphe Polystergranulate bei höheren Temperaturen (insbesondere oberhalb 100°C) eine starke Tendenz zum Verkleben.

Es sind diverse Verfahren und Vorrichtung zum herkömmlichen Kristallisieren und Nachkondensieren von Polyestermaterialien in fester Phase bekannt, so z.B. gemäss der EP-A-379684 oder DE-AS-2559290 oder der US-PS 4238593. Um ein Verkleben zu vermeiden erfolgt gemäss US-A-4064122 ein intensives Bewegen der Granulate beim Kristallisieren und Polykondensieren.

Hierbei sind auch Lösungen bekannt, das Verhältnis zuströmendes Prozessgas zu auslaufendem Produkt beim Nachkondensieren kleiner 0,6 zu halten (EP-A-717061), um das Thermoprofil besser zu regeln und Verunreinigungen effektiv zu entfernen. Der Gasstrom kann im Gegenstrom oder gleichsinnig zum Produktstrom erfolgen.

Zur Vermeidung eines erneuten Aufheizens der Granulate für die Nachbehandlung wurde bereits vorgeschlagen, ohne Abkühlung der Schmelze ein Extrudieren, Pelletieren und Kristallisieren von Polyestermaterial auszuführen (EP-A-822214). Hierbei wird eine Temperatur von 160°C bis 220°C beibehalten und für den nachfolgenden SSP-Prozess ist nur ein geringfügiger Temperaturanstieg auf ca. 170°C bis 230°C erforderlich. Eine ähnliche Lösung offenbaren die WO-A-97/23543 und die US-A-5510454, wo Schmelzetropfen auf eine heisse Metallplatte gelangen und teilweise kristallisieren. Auf Grund spezifischer Kristallstrukturen sollen die erreichbaren IV-Werte kleiner 0,3 sein. Tiefe IV-Werte von 0,4 bis 0,6 sind auch der US-A-4154920 zu entnehmen.

Es ist auch bekannt, anstelle der Metallplatte ein Band vorzusehen (ROLLDROP) oder das Material durchläuft in Strangform eine Trocknungsstrecke mit einer Ablaufrinne, welche luftdurchströmt ist, wobei nach dem Trocknen ein Granulieren erfolgt (WO-A-94/25239).

WO 00/01754 beschreibt ein Verfahren zur Kristallisation von PEN-Copolymeren ohne einen Schritt des Entfernens der flüchtigen Bestandteile, wobei zunächst ein PEN-Copolymer-Festkörper gebildet wird und eine anschliessende Kristallisation dieser Festkörper erfolgt, umfassend ein Erhitzen der Festkörper auf mindestens ihre Klebetemperatur mit einer durchschnittlichen Geschwindigkeit von mindestens 10°C/min, um agglomeratfreie kristallisierte Festkörper zu bilden. Dieses Verfahren ist für einen experimentellen Aufbau im Labor vorgesehen. Das Erzielen hoher Aufheizgeschwindigkeiten in einem kleinen Laborexperiment, in dem nicht kontinuierlich gearbeitet wird, ist natürlich viel einfacher als in einer kontinuierlich arbeitenden Anlage, bei der kontinuierlich kaltes Produkt zugeführt wird.

JP 59025815 beschreibt ein Verfahren zur Kristallisation von Polyestergranulat. Es werden jedoch keine hohen Aufheizgeschwindigkeiten und keine dünnen Produktschichten offenbart.

US 4,271,287 beschreibt ein Verfahren zur kontinuierlichen Polymerisation von PET in fester Phase, ohne jedoch hohe Aufheizgeschwindigkeiten zu erzielen.

US 5,510,454 beschreibt ein Verfahren, um eine neue Form eines niedermolekularen PET's zu erhalten und beschreibt ebenfalls die Verwendung in der Festphasenpolymerisation, um ein hochmolekulares Polymer zu erzielen. Auch hier werden keine hohen Aufheizgeschwindigkeiten und keine dünnen Produktschichten offenbart.

Der Erfindung liegt die Aufgabe zugrunde, ein Verfahren zur kontinuierlichen Polykondensation von Polyestermaterial in fester Phase zu entwickeln, welches einen hohen Durchsatz von Polyestermaterial ermöglicht. Die Lösung der Aufgabe erfolgt mit den kennzeichnenden Merkmalen des Patentanspruchs 1.

Der Erfindung liegt weiterhin die Aufgabe zugrunde, eine Vorrichtung zur Durchführung eines solchen Verfahrens zu schaffen. Diese Aufgabe wird durch die Merkmale von Patentanspruch 9 gelöst.

Bevorzugte Ausführungsvarianten sind in den Unteransprüchen offenbart.

Die Erfindung geht davon aus, dass es möglich ist, grosse Mengen von Polyestermaterial einer SSP-Behandlung zu unterziehen, ohne die gegebenen Kristallstrukturen zu schädigen, wenn ein schnelles Aufheizen erfolgt. Dieses schnelle Aufheizen zum Nachkristallisieren kann sowohl mit kalten als auch mit heissen Granulaten erfolgen. Es ist notwendig, geringe Schichthöhen an Granulat einzuhalten, um bei hohem Durchsatz ein schnelles Aufheizen (durchströmen mit heissem Prozessgas) innerhalb weniger Minuten zu erreichen. Ein solches schnelles Aufheizen muss zugleich kontrolliert erfolgen (Aufheizrate), um ein An- bzw. Aufschmelzen des Polyestermateriales zu vermeiden.

Nachfolgend ist die Temperatur zu halten und einzustellen, um trotz üblicher Verweilzeiten (bis ca. 40 Stunden) im Reaktor ein Verkleben bei der SSP-Behandlung zu vermeiden.

Bezogen auf die hohe Produktmenge ist nur ein geringer Energie- und Gasaufwand erforderlich.

Die Erfindung wird nachfolgend in einem Beispiel an Hand einer Zeichnung näher beschrieben. In der Zeichnung zeigen die
- Figur 1:: eine erste Ausführungsform in einer Prinzipdarstellung (erfindungsgemäss)
- Figur 2:: eine zweite nicht erfindungsgemässe Ausführungsform in einer Prinzipdarstellung
- Figur 3:: eine dritte Ausführungsform in einer Prinzipdarstellung (erfindungsgemäss) und
- Figur 4:: eine weitere Ausführungsform in einer Prinzipdarstellung (erfindungsgemäss).

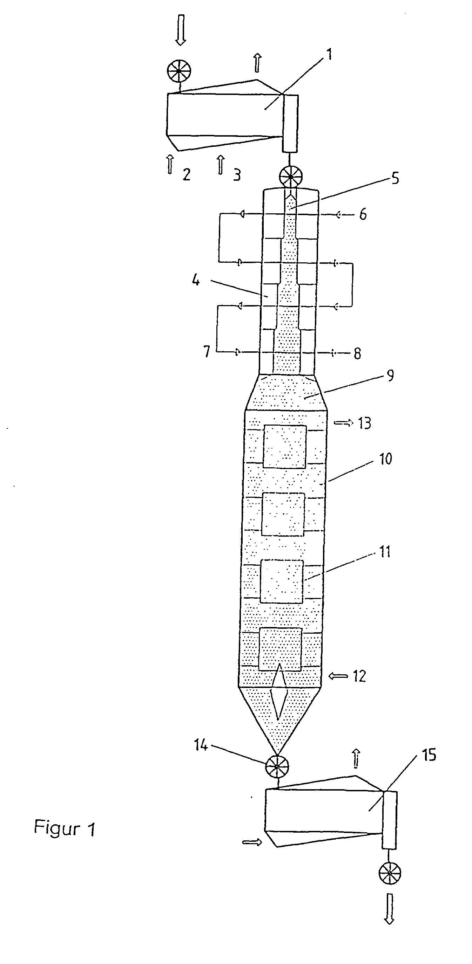

Gemäss Figur 1 gelangt ein amorphes oder teilkristallisiertes (ca. 0-50%) Polyestergranulat mit einem IV von bis zu 0.7 und mit tiefer Temperatur (Raumtemperatur oder höher) oder in heissem Zustand (bis ca. 200°C) in ein Fliessbett 1 (Typ OTWG der Anmelderin). Dort erfolgt ein Durchströmen des Granulates mit heissem Prozessgas 2, z. B. Luft oder Stickstoff. Die zugeführte hohe Gasmenge weist eine Geschwindigkeit von 1,5-4 m/s auf. Innerhalb von 2-8 Minuten wird das Granulat auf 200°C bis 250°C erwärmt, weshalb die Schichthöhe nur 1-30 cm, vorzugsweise 2-15 cm beträgt. Bei bekannten Verfahren beträgt die Aufheiz- und Verweilzeit 2-25 Minuten, bevorzugt 15 Minuten (EP-A-379684) oder 5-30 Minuten (EP-A-822214). Anstelle eines Gaseintrittes 2 können auch zwei Gaseintritte 2 und 3 mit unterschiedlichen Gaseintrittstemperaturen verwendet werden.

Der Nachkristallisator 4, in den das Granulat von oben in einen Kanal 5 gelangt, entspricht in seinem Aufbau auch der Offenbarung der DE-A-19743461 der Anmelderin. Der Kanal kann sich von ca. 5-10 cm Breite (oben) auf ca. 20-30 cm im mittleren Bereich und bis ca. 40-60 cm im unteren Bereich des Nachkristallisators 4 vergrössern. Der Kanal 5 kann aber auch eine konstante Breite von z.B. 10 cm bis z.B. 60 cm aufweisen. Das Granulat wird im Kreuzstrom mit hohen Gasmengen durchströmt mit einem Gaseintritt 6 und einem Gasaustritt 8. Der Gaseintritt kann auch an Position 7 erfolgen mit dem entsprechenden Gasaustritt an Position 6. Alternativ ist auch ein Gleich- oder Gegenstrom des Gases durch das Produkt direkt möglich. Auf Grund der offenbarten Ausbildung des Nachkristallisators 4 ergibt sich eine gleichmässige Durchströmung des Granulates bei kurzen Aufheiz- und Verweilzeiten mit nachfolgendem Tempern (ca. 0,2 bis 3 Stunden, bevorzugt 0,5 bis 1 Stunde), bei Temperaturen zwischen 200 und 250°C.

Über einen Kanal 9 gelangt das Granulat direkt in den Reaktor 10, wo es bei gleichbleibender Temperatur zwecks SSP-Behandlung bis ca. 40 Stunden verweilt. Zur Vergleichmässigung des Durchlaufs und um ein Verkleben zu verhindern, weist der Reaktor 10 Einbauten 11 auf, wie sie aus der CH-A-689284 der Anmelderin bekannt sind. Es kann mit entsprechend geringen Gasmengen im Gegenstrom gefahren werden. Als Prozessgas wird Inertgas z.B. Stickstoff verwendet. Das Produkt wird im Bereich des Gaseintrittes 12 vorgekühlt mit einer Gaseintrittstemperatur kleiner oder gleich 60 °C. Der Gasaustritt des Reaktorgases erfolgt bei Position 13, kann alternativ aber auch an Position 8 erfolgen.

Bei schnellem Aufheizen des Produktes nahe beim Schmelzpunkt, was bei der vorgeschlagenen Betriebsweise geschieht (im Fliessbett 1 und Nachkristallisator 4), wird die Kristallinitätsbildung begrenzt und es hat sich gezeigt, dass dadurch die SSP-Reaktivität stark ansteigt (der IV-Aufbau/h ist bedeutend höher als bei konventionellem Aufheizen). Siehe dazu Tabelle 1.

Das SSP-behandelte Granulat verlässt den Reaktor 10 durch eine Schleuse 14, um in einem Fliessbettkühler 15 auf unter 60°C Produkttemperatur weitergekühlt zu werden.

Als Nachkristallisator kann auch ein üblicher Dächertrockner zur Anwendung gelangen. Ebenso könnte ein zweistufiger Kristallisator zur Anwendung gelangen.

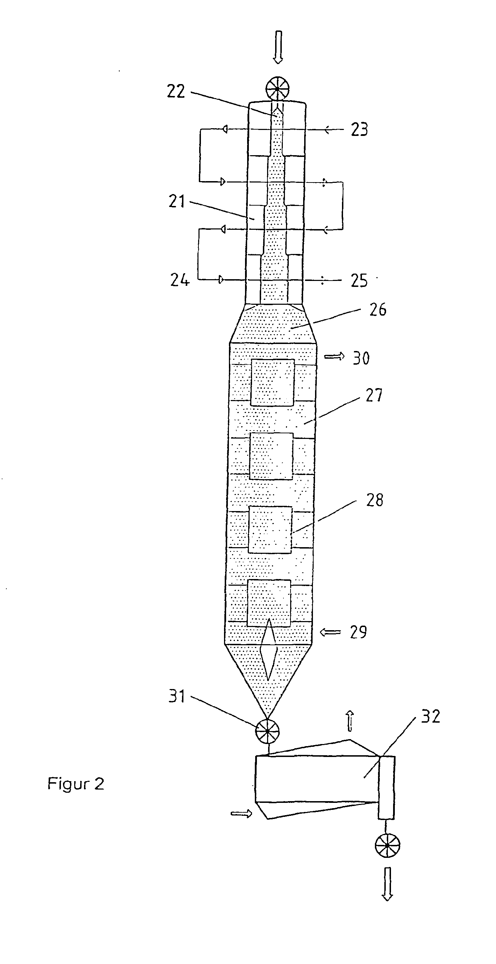

In einer zweiten Ausführung gemäss Figur 2 (nicht erfindungsgemäss) gelangt das wiederum kalte oder heisse Granulat in einen Kanal 22 einer Anlage, die in sich Nachkristallisator 21 und Reaktor 27 vereint. Der Nachkristallisator 21 weist einen ähnlichen Aufbau auf wie derjenige von der ersten Ausführung in Figur 1 (Nachkristallisator 4). Das Aufheizen auf 200° C bis 250°C erflogt schnell und zwar in den obersten Abteilen des Nachkristallisators 21. Das Gas gelangt über den Gaseintritt 23 rasch an das Granulat im Kanal 22. Die Verweilzeit im Nachkristallisator 21 beträgt zwischen 0.5 und 8 Stunden. Im untersten Abteil des Nachkristallisators 21 kann das Produkt mit dem Gaseintritt 24 wieder leicht abgekühlt werden. Der Gasaustritt erfolgt an Position 25.

Über einen Kanal 26 gelangt das Granulat direkt in den Reaktor 27, wo es bei gleichbleibender Temperatur zwecks SSP-Behandlung bis ca. 36 Stunden verweilt. Die Beschreibung des Reaktors 27 und die Prozesserklärungen von Ausführungsform 1 gelten auch für Reaktor 27. Nahe beim Boden des Reaktors 27, jedoch oberhalb eines Konusses ist ein Gaseintritt 29 vorgesehen. Ein weiterer Gaseintritt 30 befindet sich unterhalb des Kanals 26. Siehe Tabelle 1 zu den einzelnen Daten.

Das SSP-behandelte Granulat verlässt den Reaktor 27 durch eine Schleuse 31, um in einem Fliessbettkühler 32 auf unter 60°C Produkttemperatur weiter gekühlt zu werden.

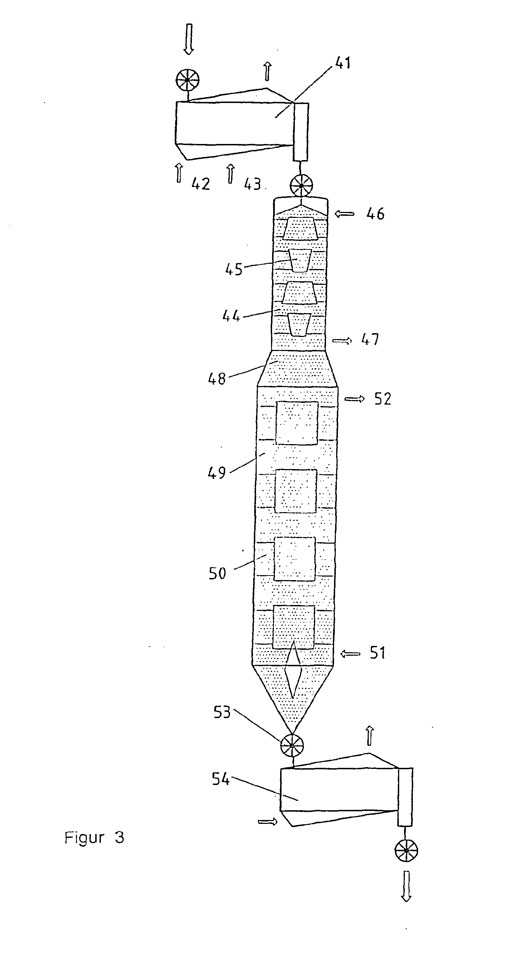

Eine dritte Ausführungsform wird gemäss Figur 3 beschrieben. Dabei gelangt ein amorphes oder teilkristallisiertes (ca. 0-50%) Polyestergranulat mit einem IV von bis zu 0.7 und mit tiefer Temperatur (Raumtemperatur oder höher) oder in heissem Zustand (bis ca. 200°C) in ein Fliessbett 41 (Typ OTWG der Anmelderin). Dort erfolgt ein Durchströmen des Granulates mit heissem Prozessgas 42, z.B. Luft oder Stickstoff, welches über den Gaseintritt 42 und/oder 43 zugeführt wird. Die zugeführte hohe Gasmenge weist eine Geschwindigkeit von 1,5-4 m/s auf. Innerhalb von 2-8 Minuten wird das Granulat auf 200°C bis 250°C erwärmt, weshalb die Schichthöhe nur 1-30 cm, vorzugsweise 2-15 cm beträgt.

Anschliessend gelangt das Granulat in einen Konditionierer 44, welcher mit ringförmigen Einbauten 45 aus Blech versehen ist. Die Einbauten 45 sind so angeordnet, dass eine gewisse Richtungsumkehr sowie bei geringem Produktdruck eine hohe Granulatsinkgeschwindigkeit erreicht wird. Die Sinkgeschwindigkeit im oberen Bereich des Konditionierers 44 ist höher als im nachfolgenden Reaktor 49, zumindest jedoch etwa gleich. Die Einbauten 45 können auch gerade (vertikal) ausgeführt sein.

Der Konditionierer 44 dient dem weiteren Erwärmen des Granulates bis auf ca. 220°C - 250°C, dem Einstellen und Halten der Temperatur, ggf. dem Kühlen bei Überhitzung.

Im Gleichstrom oder Gegenstrom wird das Granulat mittels Prozessgas erwärmt (Gaseintritt 46 und Gasaustritt 47 können ggf. vertauscht sein) und während 1-8 Stunden im Konditionierer 44 gehalten. Dabei wird der IV-Wert erhöht.

Anschliessend gelangt das Granulat via Übergangsteil 48 direkt in den unter dem Konditionierer 44 befindlichen Reaktor 49, wo es bei gleichbleibender Temperatur zwecks SSP-Behandlung bis ca. 36 Stunden verweilt. Zur Vergleichmässigung des Durchlaufs und um ein Verkleben zu verhindern, weist der Reaktor 49 Einbauten 50 auf, wie sie ebenfalls aus der CH-A-689284 der Anmelderin bekannt sind. Es kann mit entsprechend geringen Gasmengen im Gegenstrom gefahren werden. Als Prozessgas wird Inertgas z.B. Stickstoff verwendet. Das Produkt wird im Bereich des Gaseintrittes 51 vorgekühlt mit einer Gaseintrittstemperatur kleiner 60 °C. Analog zu Figur 2 ist ein Gasausstritt 52 vorgesehen.

Bei schnellem Aufheizen des Produktes nahe beim Schmelzpunkt, was bei einer Betriebsweise wie der vorgeschlagenen passiert (im Fliessbett 41 und Konditionierer 44), wird die Kristallinitätsbildung begrenzt und es hat sich gezeigt, dass dadurch die SSP-Reaktivität stark ansteigt (der IV-Aufbau/h ist bedeutend höher als bei konventionellem Aufheizen). Siehe dazu auch Tabelle 1.

Das SSP-behandelte Granulat verlässt den Reaktor 49 durch eine Schleuse 53, um in einem Fliessbettkühler 54 auf unter 60°C weiter gekühlt zu werden.

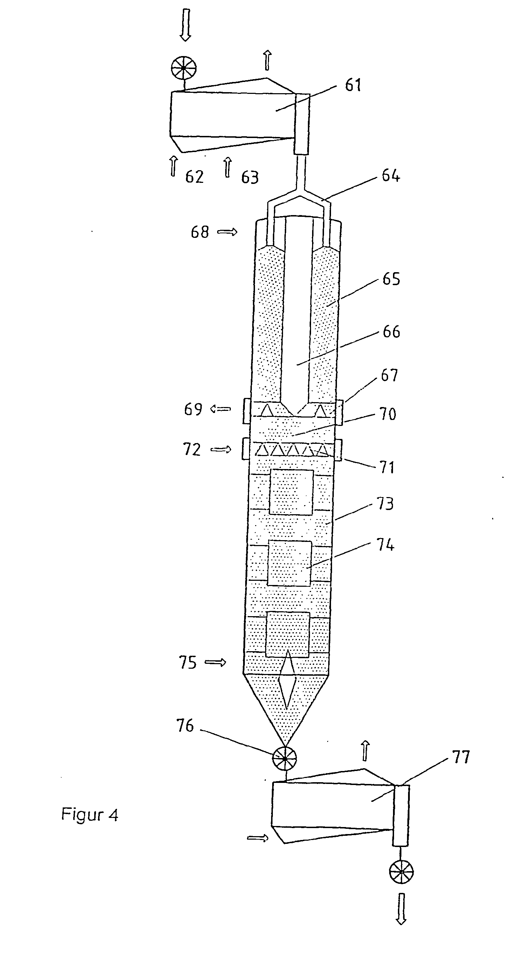

Bei einer weiteren Ausführungsform der Erfindung gemäss Figur 4 gelangt ein amorphes oder teilkristallisiertes (ca. 0-50%) Polyestergranulat mit einem IV von bis zu 0.7 und mit tiefer Temperatur (Raumtemperatur oder höher) oder in heissem Zustand (bis ca. 200°C) in ein Fliessbett 61 (Typ OTWG der Anmelderin). Dort erfolgt ein Durchströmen des Granulates mit heissem Prozessgas 62, z.B. Luft oder Stickstoff. Die zugeführte hohe Gasmenge weist eine Geschwindigkeit von 1,5-4 m/s auf. Innerhalb von 2-8 Minuten wird das Granulat auf 200°C bis 250°C erwärmt, weshalb die Schichthöhe nur 1-30 cm, vorzugsweise 2-15 cm beträgt. Anstelle eines Gaseintrittes 62 können auch zwei Gaseintritte 62 und 63 mit unterschiedlichen Gaseintrittstemperaturen verwendet werden.

Anschliessend gelangt das Granulat über einen Verteiler 64 in einen Konditionierer 65.

Der Verteiler verteilt das Produkt mittels 6 bis 16 Rohren über die ganze Ringoberfläche des Konditionierers 65. Der Konditionierer 65 selbst ist als Hohlzylinder ausgebildet. Im Aussenring bewegt sich das Produkt von oben nach unten. Der Innenring 66 ist frei von Produkt und Gas. Aussendurchmesser minus Innendurchmesser des Hohlzylinders beträgt konstant 80 bis 200 cm, bevorzugt 120 -160 cm (Produktabstand zwischen Aussenwand zu Innenwand beträgt daher 40 bis 100 cm, bevorzugt 60 -80 cm). Dadurch ergibt sich ein geringer Produktdruck und eine hohe Granulatsinkgeschwindigkeit im Konditionierer 65. Die Geometrie des Konditionierers 65 kann auch analog zum Nachkristallisators 4 gemäss der ersten Ausführungsform ausgebildet sein, d.h. dass der mit Produkt gefüllte Teil des Konditionierer von oben nach unten mit dem Durchmesser zunimmt, d.h. dass der Produktabstand zwischen Aussenwand und Innenwand stufenweise oder kontinuierlich von oben nach unten zunimmt, z.B. von 40 cm zuoberst bis 100 cm zuunterst in Produktströmungsrichtung. Dadurch ist im obersten Bereich des Konditionierers der Produktdruck am kleinsten und die Sinkgeschwindigkeit am grössten und verändert sich dann mit zunehmender Behandlungszeit des Granulates. Weiterhin ist ein Gaseintritt 68 vorgesehen.

Der Konditionierer 65 dient dem weiteren Erwärmen des Granulates bis auf ca. 200 - 250°C, bevorzugt 220 - 235°C, dem Einstellen und Halten der Temperatur, ggf. dem Kühlen bei Überhitzung. Im Gleichstrom (Gaseintritt 68 und Gasaustritt 69) oder im Gegenstrom (Gaseintritt 69 und Gasaustritt 68) wird das Granulat mittels Prozessgas erwärmt und während 1-8 Stunden im Konditionierer 65 gehalten. Dabei wird der IV-Wert erhöht.

Aus dem Konditionierer 65 gelangt das Produkt in ein Übergangsteil 70. Hier wird die Temperatur für den nachfolgenden Reaktor 73 eingestellt. Dies erfolgt mit einer Gaszuführung 72 mittels Inertgas (Gegenstromwärmeaustausch), wobei die Temperatur je nach Produkt zwischen 200°C und 250°C betragen kann. Alternativ kann auf das Übergangsteil 70 verzichtet werden.

Aus dem Übergangsteil 70 gelangt das Granulat in den Reaktor 73, wo es bei gleichbleibender Temperatur zwecks SSP-Behandlung bis zu 40 Stunden verweilt. Zur Vergleichmässigung des Durchlaufs und um ein Verkleben zu verhindern, weist der Reaktor 73 Einbauten 74 auf, wie sie aus der CH-A-689284 der Anmelderin bekannt sind. Es kann mit entsprechend geringen Gasmengen im Gegenstrom gefahren werden. Als Prozessgas wird Inertgas z.B. Stickstoff verwendet. Das Produkt wird im Bereich des Gaseintrittes 75 vorgekühlt mit einer Gaseintrittstemperatur kleiner oder gleich 60 °C. Der Gasaustritt des Reaktorgases erfolgt bei Position 69.

Bei schnellem Aufheizen des Produktes nahe beim Schmelzpunkt, was bei der vorgeschlagenen Betriebsweise geschieht (im Fliessbett 61 und Konditionierer 65), wird die Kristallinitätsbildung begrenzt und es hat sich gezeigt, dass dadurch die SSP-Reaktivität stark ansteigt (der IV-Aufbau/h ist bedeutend höher als bei konventionellem Aufheizen). Siehe dazu Tabelle 1.

Das SSP-behandelte Granulat verlässt den Reaktor 10 durch eine Schleuse 76, um in einem Fliessbettkühler 77 auf unter 60°C Produkttemperatur weiter gekühlt zu werden.

Weiterhin wäre auch denkbar, einen mittleren Gasaustritt 69 aus dem Reaktor 73 und/oder Konditionierer 65 vorzusehen. Er würde eine Umkehrung üblicher, dächerförmiger Gasverteiler 67, 71 darstellen. Zur Gewährleistung entsprechender Druckverhältnisse erfolgt dann der Gasaustrag über ein Zentralrohr und vier um 90° versetzt angeordnete Gasaustrittsrohre. Es können ein oder zwei derartige Gasaustritte bei gleichsinniger Durchströmung vorgesehen sein, um die grossen Gasmengen gut zu führen.

Das Produkt kann bei allen Ausführungsformen kombiniert im Gegenstrom und gleichsinnig durchströmt werden, um einen niedrigen Druck, bevorzugt unter 1 bar zu erreichen.

Um das Prozessgas nach dem Austritt aus Reaktor, Nachkristallisator und/oder Vorerhitzer erneut verwenden zu können, durchläuft es eine Gasreinigung bevorzugt, einen Filter, einen Gaswäscher/Scrubber oder einen Katalysator und einen Molekularsiebtrockner.

**Tabelle 1a: Der Einfluss von der Heizungsrate bis zu 200°C**

| | | | | |
|---|---|---|---|---|
| Temperaturbereich | Heizungsrate | Gesamtzeit | Schmelzwärme | Kristallinität (Basis 100% = 115 J/g) |
| [°C] | [°C/min] | [min] | [J/g] | [%] |
| 25-200 | 100 | 1,75 | 57,6 | 50,0 |
| 25-200 | 50 | 3,5 | 57,7 | 50,2 |
| 25-200 | 10 | 17,5 | 57,4 | 49,9 |
| 25-200 | 5 | 35 | 57,4 | 49,9 |

**Tabelle 1b: Der Einfluss von der Heizungsrate bis zu 230°C**

| Temperaturbereich | Heizungsrate | Gesamtzeit | Schmelzwärme | Kristallinität (Basis 100% = 115 J/g) |
|---|---|---|---|---|
| [°C] | [°C/min] | [min] | [J/g] | [%] |
| 25-230 | 100 | 2,05 | 51,1 | 44,4 |
| 25-230 | 50 | 4,1 | 52,6 | 45,7 |
| 25-230 | 20 | 10,25 | 55,8 | 48,5 |
| 25-230 | 5 | 41 | 57,0 | 49,6 |

**Tabelle 1c: Der Einfluss von Temperatur**

| Temperaturbereich | Heizungsrate | Gesamtzeit | Schmelzwärme | Kristallinität (Basis 100% = 115 J/g) |
|---|---|---|---|---|
| [°C] | [°C/min] | [min] | [J/g] | [%] |
| 25-200 | 50 | 3,5 | 57,6 | 50,0 |
| 25-225 | 50 | 4,0 | 52,7 | 45,8 |
| 25-230 | 50 | 4,1 | 52,6 | 45,7 |
| 25-235 | 50 | 4,2 | 53,6 | 46,6 |

**Tabelle 1d: Der Einfluss von Verweilzeit**

| Temperaturbereich | Heizungsrate | Gesamtzeit | Schmelzwärme | Kristallinität (Basis 100% =115 J/g) |
|---|---|---|---|---|
| [°C] | [°C/min] | [min] | [J/g] | [%] |
| 25-225 | 50 | 3 | 68,2 | 59,3 |
| 25-230 | 50 | 3 | 67,7 | 58,7 |
| 25-235 | 50 | 3 | 66,9 | 58,2 |

### Verzeichnis der Kurzzeichen

- 1: Fliessbett
- 2: Gaseintritt
- 3: Gaseintritt
- 4: Nachkristallisator
- 5: Kanal
- 6: Gaseintritt
- 7: Gaseintritt
- 8: Gasaustritt
- 9: Kanal
- 10: Reaktor
- 11: Einbauten
- 12: Gaseintritt
- 13: Gasaustritt
- 14: Schleuse
- 15: Fliessbettkühler
- 21: Nachkristallisator
- 22: Kanal
- 23: Gaseintritt
- 24: Gaseintritt
- 25: Gasaustritt
- 26: Kanal
- 27: Reaktor
- 28: Einbauten
- 29: Gaseintritt
- 30: Gasaustritt
- 31: Schleuse
- 32: Fleissbettkühler
- 41: Fliessbett
- 42: Gaseintritt
- 43: Gaseintritt
- 44: Konditionierer
- 45: Einbauten
- 46: Gaseintritt
- 47: Gasaustritt
- 48: Übergangsteil
- 49: Reaktor
- 50: Einbauten
- 51: Gaseintritt
- 52: Gasaustritt
- 53: Schleuse
- 54: Fliessbettkühler
- 61: Fliessbett
- 62: Gaseintritt
- 63: Gaseintritt
- 64: Verteiler
- 65: Konditionierer
- 66: Innenring
- 67: Gasverteiler
- 68: Gaseintritt
- 69: Gasaustritt
- 70: Übergangsteil
- 71: Gasverteiler
- 72: Gaszuführung
- 73: Reaktor
- 74: Einbauten
- 75: Gaseintritt
- 76: Schleuse
- 77: Fliessbettkühler

## Patentansprüche

1. Verfahren zur kontinuierlichen Polykondensation von Polyestermaterial in fester Phase, in Form von amorphem oder teilkristallisiertem Granulat durch Nachkristallisation bei 140°C bis 250°C und nachfolgender Nachkondensation bei 200°C bis 250°C und abschliessender Kühlung auf unter 60°C, wobei als Aufheiz- und Kühlmedium übliche Prozessgase eingesetzt werden, die Aufheizzeit auf Nachkristallisationstemperatur und Verweilzeit 1-10 Minuten beträgt, **dadurch gekennzeichnet, dass** ein Nachkristallisationsschritt im Fliessbett durchgeführt wird, wobei das Aufheizen mit einer Heizungsrate für die Aufheizung von 50°C/min.-100°C/min. bis in einen Temperaturbereich von 200°C bis 235°C erfolgt, und die Dicke der vom Prozessgas beim Nachkristallisieren im Fliessbett zu durchströmenden Produktschicht 2-15 cm beträgt.

2. Verfahren nach Anspruch 1, **dadurch gekennzeichnet dass** die Dicke der vom Prozessgas beim Nachkristallisieren zu durchströmenden Produktschicht 3 cm bis 8 cm beträgt.

3. Verfahren nach Anspruch 1 oder 2, **dadurch gekennzeichnet, dass** die Aufheiz- und Verweilzeit 2-8 Minuten beträgt.

4. Verfahren nach Anspruch 1 bis 3, **dadurch gekennzeichnet, dass** beim Nachkristallisieren eine Gasmenge mit einer Strömungsgeschwindigkeit von 1,5 bis 4 m/s verwendet wird.

5. Verfahren nach Anspruch 1, **dadurch gekennzeichnet, dass** der Anfangs-IV des Polyestermaterials bis 0,7 beträgt.

6. Verfahren nach Anspruch 1 bis 5, **dadurch gekennzeichnet, dass** das Polyestermaterial im Kreuzstrom (im Kanal) oder im Gegenstrom und/oder gleichsinnig durchströmt wird.

7. Verfahren nach Anspruch 1 bis 6, **dadurch gekennzeichnet, dass** das nachkondensierte Polyestermaterial durch das Prozessgas im Bereich des Gaseintritts vorgekühlt wird.

8. Verfahren nach einem der Ansprüche 1 bis 5, **dadurch gekennzeichnet, dass** als Prozessgas Stickstoff verwendet wird.

9. Vorrichtung zur kontinuierlichen Polykondensation von Polyestermaterial in fester Phase, bevorzugt Granulat, zur Durchführung des Verfahrens nach einem der Ansprüche 1 bis 8, aufweisend einen Nachkristallisator (4, 21), einen Reaktor (10, 27), eine Granulatkühlung und eine Gasführung, wobei der Nachkristallisator (21) direkt über dem Reaktor (27) und mit diesem eine Einheit bildend angeordnet ist, wobei dem Nachkristallisator (4) ein Fliessbett (1) vorgeschaltet ist.

10. Vorrichtung nach Anspruch 9, **dadurch gekennzeichnet, dass** der Reaktor (10, 27, 49, 73) ringförmige Einbauten (4) aufweist, die bevorzugt gleichsinnig angeordnet sind.

11. Vorrichtung nach Anspruch 9, **dadurch gekennzeichnet, dass** der Konditionierer (44) ringförmige Einbauten (45) aufweist, die gegensinnig angeordnet sind.

12. Vorrichtung nach Anspruch 8, **dadurch gekennzeichnet, dass** sie zur Gasreinigung einen Filter, einen Gaswäscher/Scrubber oder einen Katalysator und einen Molekularsiebtrockner aufweist.

## Claims

1. Method for continuous polycondensation of polyester material in the solid phase, in the form of amorphous or partially crystalline granulate, by post-crystallization at 140°C to 250°C and subsequent post-condensation at 200°C to 250°C and final cooling to below 60°C, where the usual process gases are used for the heating and cooling medium, the time for heating up to the post-crystallization temperature and for retention is 1-10 minutes; **characterised in that** a post-crystallization stage is carried out in the fluidised bed, where the heating is done at a heating rate of 50°C/min - 100°C/min, up to a temperature range of 200°C to 235°C, and the thickness of the product layer which the process gas is to flow through during the post-crystallization in the fluidised bed is 2-15 cm.

2. Method according to Claim 1, **characterised in that** the thickness of the product layer which the process gas is to flow through during the post-crystallization is 3cm to 8cm.

3. Method according to Claim 1 or 2, **characterised in that** the heating and retention time is 2-8 minutes.

4. Method according to Claim 1 to 3, **characterised in that** in the post-crystallization a quantity of gas with a flow velocity of 1.5 to 4 m/s is used.

5. Method according to Claim 1, **characterised in that** the polyester material has an initial IV of up to 0.7.

6. Method according to Claim 1 to 5, **characterised in that** the flow though the polyester material is by transverse flow (in the channel) or counter-flow and/or equidirectional flow.

7. Method according to Claim 1 to 6, **characterised in that** the post-condensed polyester material is pre-cooled by the process gas in the region of the gas entry point.

8. Method according to Claim 1 to 5, **characterised in that** nitrogen is used as process gas.

9. Device for continuous polycondensation of polyester material in the solid phase, preferably granulate, for implementing the method according to the one of the Claims 1 to 8, featuring a post-crystallizer (4, 21), a reactor (10, 27), a granulate cooling unit and a gas conduit, where the post-crystallizer (21) is located directly above the reactor (27) and forms a single unit together with it; where the post-crystallizer (4) is connected upstream to a fluidised bed (1).

10. Device according to Claim 9, **characterised in that** the reactor (10, 27, 49, 73) is fitted with ring-shaped components (4), which are preferably each aligned in the same direction.

11. Device according to Claim 9, **characterised in that** the conditioner (44) is fitted with ring-shaped components (45), which are aligned in opposite directions.

12. Device according to Claim 8, **characterised in that** it features a filter, a gas scrubber or a catalyser and a molecular sieve dryer, for cleaning the gas.

## Revendications

1. Procédé de polycondensation continue d'un matériau de polyester en phase solide, sous forme d'un granulé amorphe ou partiellement cristallisé, par cristallisation secondaire à 140 à 250°C, puis condensation secondaire à 200 à 250°C, et pour terminer refroidissement à une température inférieure à 60°C, dans lequel on utilise en tant que fluides de chauffage et de refroidissement des gaz de procédé usuels, le temps de chauffage à la température de cristallisation secondaire et le temps de séjour étant de 1 à 10 minutes, **caractérisé en ce qu'**on procède à une étape de cristallisation secondaire en lit fluidisé, le chauffage étant effectué, à une vitesse de montée en température pour le chauffage de 50°C/min à 100°C/min, jusqu'à une plage de températures de 200 à 235°C, l'épaisseur de la couche de produit devant être traversée par le gaz de procédé lors de la cristallisation secondaire en lit fluidisé étant de 2 à 15 cm.

2. Procédé selon la revendication 1, **caractérisé en ce que** l'épaisseur de la couche de produit devant être traversée par le gaz de procédé lors de la cristallisation secondaire est de 3 à 8 cm.

3. Procédé selon la revendication 1 ou 2, **caractérisé en ce que** le temps de chauffage et le temps de séjour sont de 2 à 8 minutes.

4. Procédé selon les revendications 1 à 3, **caractérisé en ce que**, lors de la cristallisation secondaire, on utilise une quantité de gaz présentant une vitesse d'écoulement de 1,5 à 4 m/s.

5. Procédé selon la revendication 1, **caractérisé en ce que** la V.I. initiale du matériau de polyester peut aller jusqu'à 0,7.

6. Procédé selon les revendications 1 à 5, **caractérisé en ce que** le matériau de polyester est traversé par un courant transversal (dans la gaine), ou à contre-courant et/ou à co-courant.

7. Procédé selon les revendications 1 à 6, **caractérisé en ce que** le matériau de polyester ayant subi la condensation secondaire est pré-refroidi par le gaz de procédé dans la zone d'entrée du gaz.

8. Procédé selon l'une des revendications 1 à 5, **caractérisé en ce qu'**on utilise de l'azote en tant que gaz de procédé.

9. Appareillage pour la polycondensation continue d'un matériau de polyester en phase solide, de préférence un granulé, pour la mise en oeuvre du procédé selon l'une des revendications 1 à 8, comportant un cristallisoir secondaire (4, 21), un réacteur (10, 27), un système de refroidissement du granulé et un système de guidage du gaz, le cristallisoir secondaire (21) étant disposé directement au-dessus du réacteur (27) et formant une unité avec ce dernier, un lit fluidisé étant monté en amont du cristallisoir secondaire (4).

10. Appareillage selon la revendication 9, **caractérisé en ce que** le réacteur (10, 27, 49, 73) comprend des éléments intérieurs annulaires (4), qui de préférence sont disposés dans le même sens.

11. Appareillage selon la revendication 9, **caractérisé en ce que** l'unité de conditionnement (44) comprend des éléments intérieurs annulaires (45) disposés en sens contraires.

12. Appareillage selon la revendication 8, **caractérisé en ce qu'**il comprend, pour l'épuration du gaz, un filtre, un laveur de gaz/scrubber, ou un catalyseur et un séchoir à tamis moléculaires.
